# EUROPEAN PATENT SPECIFICATION

(11) **EP 2 025 989 B1**
(45) Date of publication and mention of the grant of the patent: **12.05.2010**
(21) Application number: 08159639.7
(22) Date of filing: 03.07.2008
(51) Int. Cl.: F16L 33/23, F16L 31/00, F24F 13/02

(54) **Air ventilation duct with tube coupling**
Lüftungskanal mit Rohrmuffe
Conduite de ventilation d'air dotée d'un couplage de tuyaux

(30) Priority: 03.07.2007 NL 1034084
(43) Date of publication of application: 18.02.2009
(73) Proprietor: Ubbink B.V., 6984 AA Doesburg (NL)
(72) Inventor: Ravestein, Frans Gerrit, 3931 EL Woudenberg (NL)
(74) Representative: De Hoop, Eric

(56) References cited:
- US-A- 5 909 904
- US-A1- 2004 061 335
- US-A1- 2006 061 104

## Description

### BACKGROUND OF THE INVENTION

The invention relates to an air ventilation duct comprising at least two consecutive tube parts made of compressible synthetic material, and a tube coupling for mutual coupling of the tube parts.

US 2004/0061335 discloses a coupling according to claim 1, for coupling corrugated conduit sections. The coupling comprises a cylindrical conduit joining member that is inserted in the conduit sections, and a pair of arcuate, U-shaped arms that are pivotably connected to the conduit joining member to lock the conduit sections by confinement of a corrugation. The arms need to be kept spread both in order to enable the conduit joining member to be freely inserted into the conduit sections, which can hardly be done with only one or two hands.

In a known air ventilation duct the tube parts are made of expanded polyethylene. This material has good heat insulating properties. During the expansion of the polyethylene, pentane gas is released. The release of pentane gas continues for some time after the formation of the tube parts, as a result of which unroundnesses and differences in the outer diameter may arise in the tube parts. During use of the air ventilation duct the tube parts may shrink to some extent, resulting in a reduction of the outer diameter. This all depends on the temperature level of the air passed through. Coupling sleeves that clampingly engage onto the outer wall of the tube parts will as a result in the long run become locally detached from the outer wall. The gaps arising due to this relaxation, locally result in undesired pressure loss, energy loss, accumulation of dirt or condensation.

It is an object of the invention to provide an air ventilation duct comprising at least two consecutive tube parts that are coupled to each other in a durably sealed manner.

It is an object of the invention to provide an air ventilation duct comprising at least two consecutive tube parts that can be coupled easily using only one or two hands.

### SUMMARY OF THE INVENTION

The invention provides an air ventilation duct according to claim 1.

The shape-retaining insertion member can counteract diameter differences, particularly diameter reduction of the tube end near the tightening web, resulting in a durable envelopment by the tightening web. A diameter reduction can moreover lead to a tighter connection to the insertion member. A diameter increase can be counteracted by the tightened closure. The tube coupling is easy to handle and place as the insertion member, the tighforming web and the bridge are formed as a monoblock. The tube coupling is suitable to be made by means of injection moulding.

The insertion member can abut all round against the inner wall of the tube part when the insertion member is adapted for a circumferential abutment against the inside of the tube part, which abutment is oriented transverse to the insertion direction.

The insertion member can be particularly suitable for tube parts having a circular cross-section when the insertion member comprises a cylinder for accommodation in the tube part.

The tube part can be biased in a tightly abutting manner around the insertion member when the insertion member comprises an insertion end having at its outside a pilot edge oriented diagonally to the insertion direction. Biasing can take place evenly over the insertion when the insertion member at the outside tapers in insertion direction.

Alternatively or additionally the outside dimension of the insertion member and the inside dimension of the tube part transverse to the insertion direction are mutually adapted for a flared placement of the end over the insertion member, wherein the inside dimension due to flaring preferably increases approximately 1-5 mm.

When the insertion member at the inside has a lead-through channel with a smooth inner wall, the insertion member can form a continuation of the tube parts to which for instance dirt particles in the air have difficulty adhering to.

In one embodiment the tube coupling comprises an abutment edge that extends substantially radially from the insertion member, for abutment against an end face of the tube part, wherein the abutment edge in circumferential direction of the tube part preferably circumferentially extends around the insertion member. The abutment edge is able to ensure a straight placement of the insertion member in the tube part.

In one embodiment the tube coupling comprises two oppositely oriented insertion members to be placed in the meeting tube ends.

The tube coupling is able to ensure thermal insulation between the tube parts when the abutment edge lies apart from the tightening web for keeping free an air chamber between the end faces of the tube parts.

The bridge keeps the insertion member and the tightening web at the location of the bridge preferably at equal fixed mutual distance and orientation in both the relaxed and tightened condition of the tightening web, wherein the mutual distance preferably is adapted to the thickness of the circumferential wall of the tube part to bring and/or keep the compressible tube wall material between the insertion member and the tightening web at the location of the bridge in a somewhat compressed condition. Alternatively formulated the bridge keeps the insertion member and the tightening web permanently at a fixed mutual distance and orientation at the location of the bridge. The compression can take place when placing the insertion member in the tube part, as a result of which the coupling can remain temporarily hanging from the lower side of a vertical tube part as well. The compression can furthermore ensure the clamping against the insertion member, as at the location of the bridge the tightening web is no longer pushed further towards the insertion member when the closing means are operated.

In a simple embodiment the bridge forms a continuation of the abutment edge extending in radial direction.

In addition to a force-closed tightened closure, the tightening web may enter into a form-closed connection of the tube part to the tube coupling when the tightening web at its side edge extending in longitudinal direction has been provided with an insertion edge oriented towards the insertion member, which insertion edge within the tightened closure forms a retaining groove in the compressible tube wall material.

Said compression at the location of the bridge can take place without hindrance from the insertion edge when the insertion edge in circumferential direction starts from or beyond the ends of the bridge.

In one embodiment the tightening web is adapted to be placed about both ends. The form-closed connection can be entered into on both meeting tube parts simultaneously when the tightening web is provided with an insertion edge on both side edges extending in longitudinal direction.

The tightening web can be sufficiently opened for placing the insertion member in the tube part when the tightening web is open and the closing means are provided at a first and second end, respectively, of the tightening web.

The tube coupling can be manually installed without using tools, when the closing means are provided with hand engagement members which at or at a short distance from the first and second end, respectively, project from the tightening web for moving the first and second end towards each other between fingers and thumb.

Preferably the closing means comprise cooperating centring means for transverse to the longitudinal direction of the tightening web orienting the first and second end straight above or towards each other.

The tube coupling can be brought into the desired tightened position stepwise when the closing means are adapted for in consecutive closing positions closing the tightening web with decreasing inner diameter, preferably only in the direction of said consecutive tightened positions. Also in case of shrinkage or relaxation in the wall of the tube part the tightening web can in the long run be brought into the desired tightened position again by choosing a next tightened position. The consecutive closing positions preferably are predetermined.

In one embodiment thereof the closing means comprise cooperating hook members at the first and second end of the tightening web, wherein the hook members preferably are mutually adapted for locking the interengaged condition.

The interengaged position can be locked when the closing means comprise teeth at the first and/or second end, and a tooth at the second and first end, respectively, which tooth cooperates with the teeth, wherein the cooperating teeth comprise cooperating abutment surfaces that lean with respect to the closing direction.

In one development of the tube coupling a first and a second end of the tightening web is provided with a first and second web end edge, respectively, that engage each other. The web end edges can define an end position of the tightening web.

In a further embodiment thereof the closing means comprise clamping means for clamping both web end edges towards each other, particularly against each other. In a further development thereof the clamping means are adapted for activation by movement in a plane perpendicular to the insertion direction.

The clamping means in that case preferably form a click-over connection, as a result of which assembly and disassembly is simple. The clamping means may comprises a click-over strip connected to the tightening web near its first end and provided with first hook means for cooperation with the second hook means provided near the second end of the tightening web.

The click-over strip can be formed as one unity with the tightening web. Alternatively the click-over strip is made separately and attached to the tightening web by means of a snap connection. As a result the click-over strip can be universally used for coupling tubes of different tube diameters.

Preferably the click-over strip is hinged to the first tightening web end by means of a bending-stiff intermediate strip with hinge ends, and at its side facing away from the first tightening web end is provided with first snap means cooperating with second snap means on the tightening web. In this way closing and opening the tightened closure can take place in one simple action. The click-over strip is permanently connected to the tightening web.

The intermediate strip with hinge ends preferably is movable between an assembling position, in which the intermediate strip with hinge ends, considered in the direction towards the second tightening web end, is oriented outward from the tightening web and a closing position, in which the intermediate strip with hinge ends, considered in the direction towards the second tightening web end, is oriented inward from the tightening web and has been moved through a dead centre. In this way the snap action is enhanced and a large clamping force can be exerted on the tightened closure. Snap means may optionally be dispensed with.

In one embodiment with intermediate strip with hinge ends, the intermediate strip with hinge ends is connected by means of integrally formed hinges to the click-over strip and to the tightening web.

In one embodiment the first snap means of relatively soft material are integrally formed with the click-over strip and the second snap means are of the material of the tightening web.

The realisation of the tightened closure, particularly without the movement of the click-over strip, is facilitated when the first and second web end edge are formed convex and concave, respectively, in order to be able to engage into each other. They are as it were pre-positioned.

Preferably at the ends the tube parts have an inner diameter within a range of 100-250 mm, particularly substantially 125, 150, 160, 180, 200 or 250 mm. The tube coupling can be adapted thereto. Such diameters are common in trade and commerce and specific to air ventilation ducts.

The formation of a thermal bridge between the duct parts can be counteracted when the duct coupling is made of an injection mouldable or extrudable synthetic material.

The walls of the duct parts are particularly thermally insulating when the duct parts are made of foamed material, preferably polyethylene.

The invention furthermore relates to a duct coupling suitable and intended for an air ventilation duct according to the invention.

The aspects and measures described in this description and the claims of the application and/or shown in the drawings of this application may where possible also be used individually. Said individual aspects may be the subject of divisional patent applications relating thereto. This particularly applies to the measures and aspects described per se in the sub claims.

### SHORT DESCRIPTION OF THE DRAWINGS

The invention will be elucidated on the basis of a number of exemplary embodiments shown in the attached drawings, in which:
Figures 1A and 1B show a view in perspective and a central cross-section, respectively, of a first embodiment of a tube coupling according to the invention;
Figures 1C and 1D show a longitudinal section and a front view, respectively, of the tube coupling according to figures 1A and 1B, installed between two tube ends, having a partial cut-out in one of the tube ends;
Figures 2A and 2B show a front view of a second embodiment of a tube coupling according to the invention, during and after installation, respectively, between tube ends that are not shown;
Figure 3 shows a view in perspective of a part of a third embodiment of a tube coupling according to the invention; and
Figure 4 shows a front view and a detail, respectively, of a fourth embodiment of a tube coupling according to the invention.

### DETAILED DESCRIPTION OF THE DRAWINGS

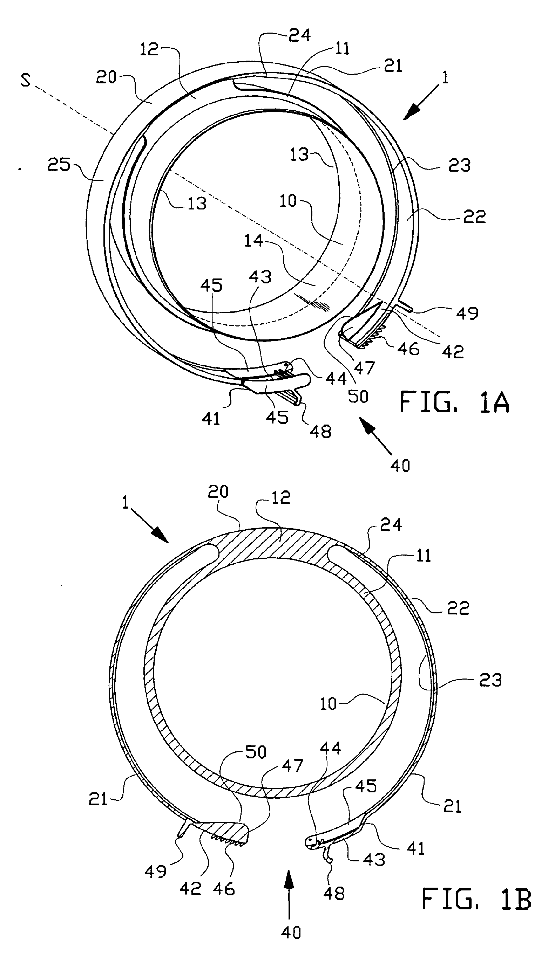

The synthetic tube coupling 1 according to a first embodiment of the invention as shown in figures 1A-D is made by injection moulding and comprises a hollow, substantially straight insertion cylinder 10 having a circular cross-section. The outside of the insertion cylinder 10 slightly tapers to both ends, as a result of which the tube coupling can be released from the injection mould. The inner surface 14 of the insertion cylinder 10 is smooth, and at both ends a circumferential, inclined pilot edge 13 is provided.

At the outside of the insertion cylinder 10, the tube coupling 1 comprises a circumferentially extending flat centring edge 11, of which with respect to the centre line S in radial direction a wider section forms a bridge 12 towards a closable tightening web 20. The centring edge 11 defines the plane of symmetry of the tube coupling 1. Through injection moulding the insertion cylinder 10, the bridge 12 and the tightening web 20 form one unity or monoblock, wherein the section of the tightening web 20 extending along the bridge 12 is kept permanently at a fixed distance and orientation with respect to the insertion cylinder 10.

The tightening web 20 comprises a first tightening web half 21 and a second tightening web half 25 both extending from the bridge 12 and built up with an elongated strip 22 and insertion edges 23 formed at the longitudinal side edges and oriented towards the insertion cylinder 10. Considered in circumferential direction of the insertion cylinder 10, the diagonally ascending beginning 24 of the insertion edges is largely if not entirely situated beyond the bridge 12. At the end of the tightening web halves 21, 25 a clasp closure 40 is provided.

At the second tightening web half the clasp closure 40 comprises a clasp 41 to be placed over a closing strip 42 at the other tightening web half 21.

The clasp 41 comprises a rear wall 43 and two side walls 45 facing the insertion cylinder 10, which side walls as regards shape follow the curvature of the tightening web halves 21, 25. At the inside the clasp 41 comprises two first teeth 44 extending transverse to the longitudinal direction of the tightening web halves 21, 25. The closing strip 42 can be accommodated snugly or with slight play between the side walls 45, as a result of which the clasp 41 can be placed over the closing strip 42 in an auto-piloting or auto-orienting manner. At the outside the closing strip 42 is provided with several second teeth 46 extending transverse to the longitudinal direction of the tightening web halves 21, 25, which teeth 46 cooperate with the first teeth 44. Due to the cooperation of the first and second teeth 44, 46 several predetermined closing positions of the tightening web 20 are possible, which closing positions are consecutive in the closing direction.

The first and second teeth 44, 46 comprise engagement surfaces that are oriented diagonally and are leaning to the closing direction, so that the normal of said surfaces faces away from the opposite tooth 44, 46 with which the first or second tooth 44, 46 in question cooperates. The clasp closure 40 is self-locking as a result, wherein the clasp 41 in the closing position is urged against the closing strip 42.

At the inside the closing strip 42 comprises a centring plate 47 facing the insertion cylinder 10 and having a rounded distal pilot edge 50. The clasp 41 and the closing strip 42 at the outside are provided with a curved finger engagement part 48 and a straight thumb engagement part 49, respectively. In the free or unlocked condition the clasp closure 40 is kept open because the tightening web halves 21, 25 are formed to be stably open of their own accord from the section of the tightening web 20 extending in circumferential direction along the bridge 12, with from the bridge 12 an increasing distance with respect to the insertion cylinder 10.

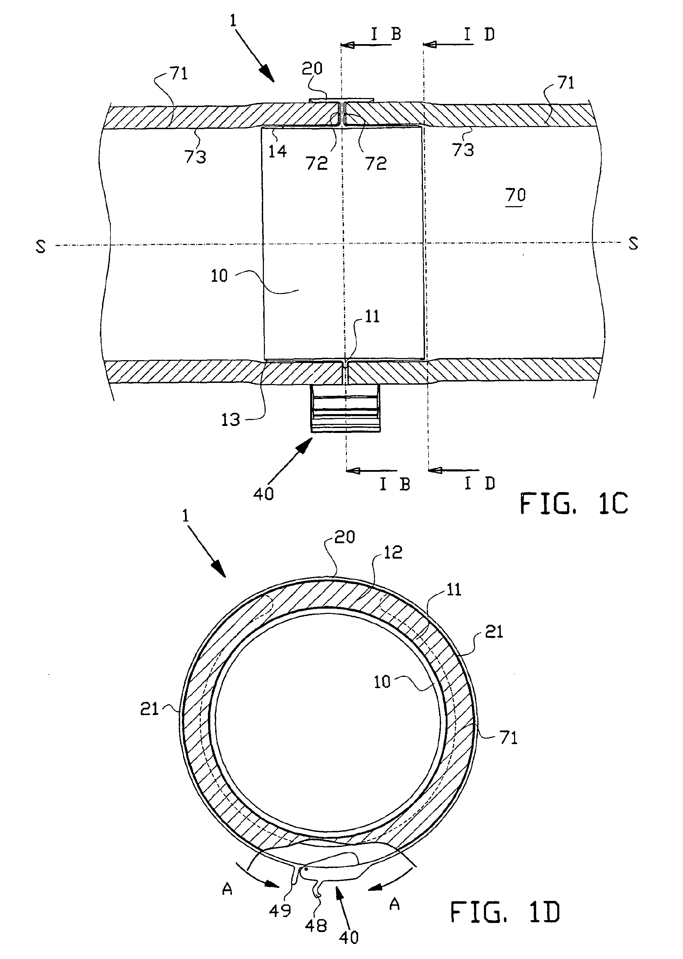

Figures 1A and 1B show the tube coupling 1 prior to its installation in the air ventilation duct 70 shown in figures 1C and 1D.

The air ventilation duct 70 is built up using several tube parts 71 made of expanded, foamed polyethylene, as a result of which they have good thermal insulating properties. The diameters are within a range of 100-250 mm and particularly are substantially 125, 150, 160, 180, 200 or 250 mm. In this example the inner diameter is 150 mm. The tube parts 71 are made in standard lengths of over 2 meters, in this example 2.25 meters and supplied to the location of installation. The tube parts 71 may run straight or form a bend. The outside of the casing of the tube parts 71 in longitudinal direction coincides with the centre line S, substantially even or level and straight at least at the location of the insertion.

In figure 1C the ends of the tube parts 71 have been slid over the insertion cylinder 10, wherein the end faces 72 abut the centring edge 11 and the bridge 12. The outer diameter of the insertion cylinder 10 changes along the pilot edge 13 from 149 to 151 mm, and due to the conicity subsequently to 152 mm, as a result of which the ends of the tube parts 71 via the pilot edges 13 have been flared of stretched approximately 2 mm as regards diameter. The tube parts 71 as a result already abut the insertion cylinder 10 in an airtight and sealing manner, wherein the inner surface 14 of the insertion cylinder 10 practically forms a continuation of the inner surface 73 and the tube parts 71. The fixed distance between the insertion cylinder 10 and the tightening web 20 at the location of the bridge 12 is such that the wall of the tube parts 71 in between has already been slightly compressed.

The placement of the tube parts 71 discussed above and the disposing thereinbetween of the tube coupling 1 can be carried out using two hands. In the as yet opened condition of the clasp closure 40 according to figure 1C, the tube parts 71 and the tube coupling 1 form a by itself stable and coherent unity, which can be adjusted using two hands in order to achieve the desired shape of the final air ventilation duct 70.

In figure 1D the clasp closure 40 is shown closed. For that purpose the finger engagement part 48 and the thumb engagement part 49 have been engaged between fingers and thumb and squeezed towards each other in direction A transverse to the centre line S, wherein the tightening web halves 21, 25 from the section extending beyond the bridge 12 are bent elastically resilient towards the tube parts 71. The centring plate 47 has thus ended up in an auto-piloting manner between the end faces 72 kept at a fixed distance from each other by the centring edge 11, and the clasp 41 has subsequently or simultaneously been moved in a self-piloting manner over the closing strip. When closing the insertion edges 23 are pressed into the wall of the tube parts 71 until the longitudinal strip 22 firmly abuts the walls. The insertion cylinder 10 then ensures the counter force on the wall, wherein due to tightening under the insertion edges 23 a groove is also formed in the resilient, foamed material of the tube parts 71. As a result in addition to the tightened flared condition of the tube parts 71 over the shape-retaining insertion cylinder 10 and in addition to the tightening together against the insertion cylinder 10, a shape-retaining closure is effected.

The clasp closure 40 may after a while be adjusted by squeezing the finger engagement part 48 and the thumb engagement part 49 between fingers and thumb further and towards each other in direction A, as a result of which the first and second teeth 44, 46 mesh in a next, tighter closing position. Likewise the clasp closure 40 can be opened again in a combined squeeze and pulling action for instance to inspect the inside of the tube parts 71.

The further embodiments of tube couplings according to the invention discussed below, have the same insertion cylinder 10, centring edge 11, bridge 12 and tightening web 20 having the two tightening web halves 21, 25. The tightening web closure at the tightening web halves 21, 25 differs per embodiment.

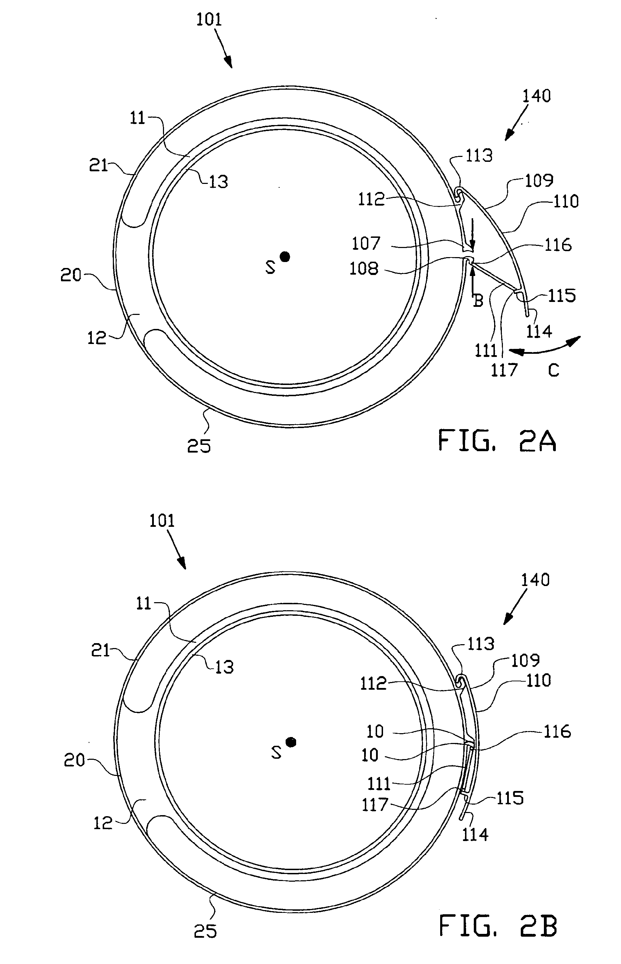

The tube coupling 101 according to the second embodiment of the invention as shown in figure 2A and 2B has a tightening web closure 140 comprising a support end edge 107 having a concave surface at the first clamping web half 21 and a support end edge 108 having a convex surface at the second tightening web half 25. At a distance from the concave support end edge 107 a hook edge 112 facing away therefrom is formed. At the second tightening web half 25 a closure 109 is connected as one whole, having a bent closing strip 110, which at one end is provided with a hook edge 113, able to cooperate with the hook edge 112 at the first tightening web half 21, and at the other end is provided with an engagement edge 114. Near the engagement edge 114 at the side facing the second tightening web half 25 a rib 115 is integrally formed with the closing strip 10 which via resilient hinge 117 merges into a rigid intermediate strip with hinge ends 111, which intermediate strip with hinge ends 111 at the other edge is connected to the support end edge 108 by resilient hinge 116.

When arranging the tube coupling 101 the tightening web 20 can be fully opened. After insertion of the insertion cylinder 10 when tilting the closing strip 109 in the direction C, perpendicular to the centre line S, the end edges 107, 108 as a result of leverage will be urged further towards each other in direction B, on the one hand due to the hook action between the hook edges 112 and 113, and on the other hand the force exerted via the hinging intermediate strip with hinge ends 111. When, while tightening the tightening web halves 21, 25, the end edges 107, 108 have been brought against the walls of the tube parts 71 and against each other, further movement of the closing strip 110 in the direction C can urge the intermediate strip with hinge ends 111 in its plane through a tangential to the circle concentric with S, the circle running through resilient hinge 116, and as shown in figure 2B, be clicked over to the inside, to the position tilted through the dead centre, in which the tightening position of the tightening web 20 is secured. Large forces may be exerted here on the walls of the tube parts 71. For disassembling the closing strip 110 can be clicked back through the dead centre in opposite direction C.

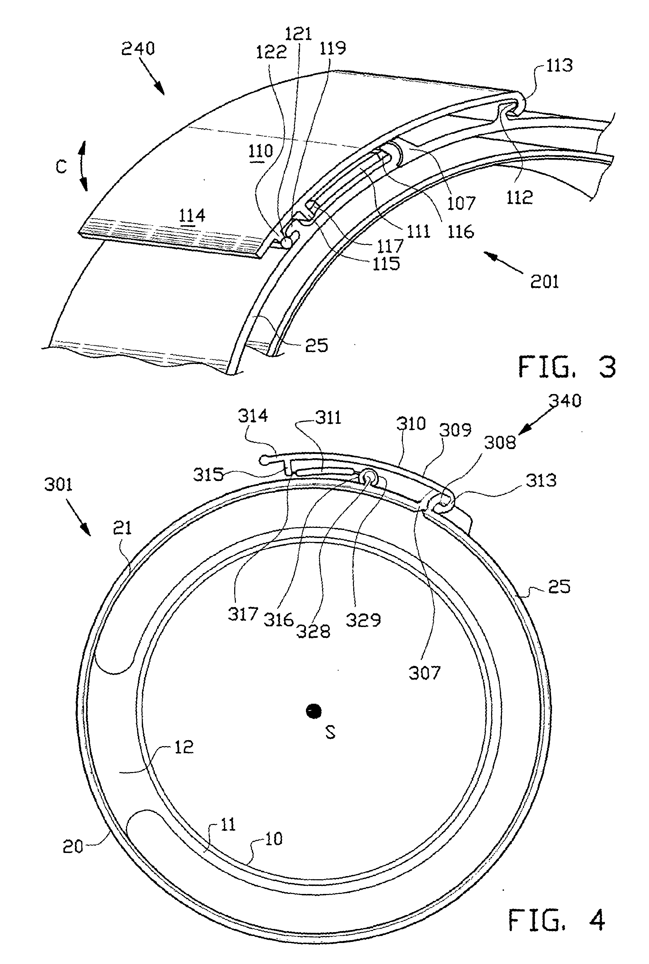

In figure 3 a tube coupling 201 according to a third embodiment is shown, having a clicking tightening web closure 240 comparable to the one according to the second embodiment. However, here the intermediate strip with hinge ends 111 is not placed through a dead centre, however for securing the closure use is made of a click edge 119 at the second tightening web half 25 cooperating with a snap edge 121 integrally formed at a rib 122 pending down from the closing strip 110.

The tube coupling 301 according to the fourth embodiment of the invention as shown in figure 4 has a clicking tightening web closure 340 which is comparable to the said clicking tightening web closures 140, 240. The tightening web closure 340 comprises a support end edge 307 having a concave surface at the first tightening web half 21 and a support end edge 308 having a convex surface at the second tightening web half 25. At a distance from the concave support end edge 107 a rib 328 is formed to which a closure 309 as an initially separate part is snapped fixed. The closure 309 comprises a bent closing strip 310, which at one end is provided with a hook edge 313, which is able to cooperate with the hook edge 308 at the second tightening web half 25, and at the other end is provided with an engagement edge 314. Near the engagement edge 314, at the side facing the first tightening web half 21, a rib 315 is integrally formed at the closing strip 310, which via resilient hinge 317 merges into a rigid intermediate strip with hinge ends 311, which intermediate strip with hinge ends 311 at the other edge is connected to a slot-shaped edge 329 via resilient hinge 316, which slot-shaped edge 329 is snapped onto the complementary shaped rib 328 on the first tightening web half 21. With respect to the second and third embodiment the intermediate strip with hinge ends 311 is more spaced apart from the end edges 307, 308 to be tightened against each other.

The tightening web 20 with the related closure, and preferably the entire tube coupling 1, 101, 201, 301 can be made of by itself shape-retaining yet slightly bendable material, particularly synthetic material having those properties, such as polypropylene or ABS. The bending or living hinges and snap edges can then be made of a thermoplastic elastomer, particularly PPE, PU, PVC, TPE or TPU.

Condensation is prevented with the tube coupling 1,101, 201, 301 of synthetic material. A thermal bridge is absent. The annular space between the centring edge 11, the closing web 20 and the end faces 72 of the tube parts 71 form an air chamber ensuring heat insulation at the location of the transition between the tube parts 71.

All tube couplings 1, 101 201, 301 can be manually placed and disassembled without the use of tools. The tube couplings can be designed very thin, so that the overall diameter of the duct 70 does not become much larger.

The synthetic sleeve can furthermore be supplied in various colours for, if so desired, being striking or inconspicuous.

The above description is included to illustrate the operation of preferred embodiments of the invention and not to limit the scope of the invention. Starting from the above explanation many variations that fall within the scope of the present invention, as defined in the claims, will be evident to an expert.

## Claims

1. Air ventilation duct comprising at least two consecutive tube parts (71) made of compressible synthetic material a tube coupling (1, 101, 201, 301) for mutual coupling of the meeting ends of the tube parts, wherein the tube coupling comprises a shape-retaining insertion member (10), having an insertion direction (S), to be placed against the inside of a tube part, a tightening web (20) to be placed against the outside of the tube part a bridge (12) extending transverse to the insertion direction (S), which bridge connects the insertion member (10) with the tightening web (20), and closing means (40, 140, 240, 340) for forming a tightened closure for the tightening web around the tube part, **characterised in that** the insertion member (10), the tightening web (20) and the bridge (12) are formed as a monoblock.

2. Air ventilation duct according to claim 1, wherein the insertion member is adapted for a circumferential abutment against the inside of the tube part (71), which abutment is oriented transverse to the insertion direction (S), and/or wherein the insertion member (10) comprises a cylinder for accommodation in the tube part (71).

3. Air ventilation duct according to any one of the preceding claims, wherein the insertion member (10) comprises an insertion end having at its outside a pilot edge (13) oriented diagonally to the insertion direction (S), and/or wherein the insertion member (10) at the outside tapers in insertion direction (S).

4. Air ventilation duct according to any one of the preceding claims, wherein the outside dimension of the insertion member (10) and the inside dimension of the tube part (71) transverse to the insertion direction (S) are mutually adapted for a flared placement of the end over the insertion member, wherein the inside dimension due to flaring preferably increases approximately 1-5 mm, and/or wherein the insertion member at the inside has a lead-through channel with a smooth inner wall.

5. Air ventilation duct according to any one of the preceding claims, wherein the tube coupling (1, 101, 201, 301) comprises an abutment edge (11) that extends substantially radially from the insertion member, for abutment against an end face of the tube part, wherein the abutment edge in circumferential direction of the tube part preferably circumferentially extends around the insertion member.

6. Air ventilation duct according to any one of the preceding claims, wherein the tube coupling (1, 101, 201, 301) comprises two oppositely oriented insertion members (10) to be placed in the meeting tube ends, wherein the insertion member preferably comprises an abutment edge (11) that extends substantially radially from the insertion member (10), for abutment against facing end faces of the tube parts (71), wherein the abutment edge (11) preferably lies apart from the tightening web for keeping free an air chamber between the end faces of the tube parts (71).

7. Air ventilation duct according to any one of the preceding claims, wherein the bridge only extends over a part of the circumference of the insertion member (10), wherein, preferably, the bridge (12) keeps the insertion member (10) and the tightening web (20) at the location of the bridge at equal fixed mutual distance and orientation in both the relaxed and tightened condition of the tightening web (20), wherein the mutual distance preferably is adapted to the thickness of the circumferential wall of the tube part (71) to bring and/or keep the compressible tube wall material between the insertion member (10) and the tightening web (20) at the location of the bridge (12) in a somewhat compressed condition.

8. Air ventilation duct according to claim 5, or 6 and 7, wherein the bridge (12) forms a continuation of the abutment edge (11) extending in radial direction.

9. Air ventilation duct according to any one of the preceding claims, wherein the tightening web (20) at its side edge extending in longitudinal direction has been provided with an insertion edge (23) oriented towards the insertion member (10), which insertion edge within the tightened closure forms a retaining groove in the compressible tube wall material, wherein the bridge (12) only extends over a part of the circumference of the insertion member (10), wherein the insertion edge (23) in circumferential direction of the insertion member starts from or beyond the ends of the bridge (12), wherein the tightening web (20) preferably on both side edges extending in longitudinal direction has been provided with an insertion edge (23).

10. Air ventilation duct according to any one of the preceding claims, wherein the tightening web (20) is open and the closing means (40) are provided at a first and second end, respectively, of the tightening web, wherein the closing means (40) preferably are provided with hand engagement members (48, 49) which at or at a short distance from the first and second end, respectively, project from the tightening web (20) for moving the first and second end towards each other between fingers and thumb, and/or wherein the closing means (40) preferably comprise cooperating centring means (45) for transverse to the longitudinal direction of the tightening web (20) orienting the first and second end straight above or towards each other.

11. Air ventilation duct according to any one of the preceding claims, wherein the closing means (40, 140, 240, 340) are adapted for in consecutive closing positions closing the tightening web with decreasing inner diameter, preferably only in the direction of said consecutive tightened positions, wherein the consecutive closing positions preferably are predetermined.

12. Air ventilation duct according to claim 10 or 11, wherein the closing means (40, 140, 240, 340) comprise cooperating hook members (44, 46, 112, 113) at the first and second end of the tightening web, wherein the hook members preferably (44, 46, 112, 113) are mutually adapted for locking the interengaged condition.

13. Air ventilation duct according to any one of the claims 10-12 wherein the closing means (40) comprise teeth (46) at the first and/or second end, and a tooth (44) at the second and first end, respectively, which tooth (44) cooperates with the teeth (46), wherein the cooperating teeth (44, 46) comprise cooperating abutment surfaces that lean with respect to the closing direction.

14. Air ventilation duct according to any one of the preceding claims, wherein the tube coupling (1, 101, 201, 301) is made of an injection mouldable or extrudable synthetic material, which preferably is dimensionally stable or shape-retaining by itself, preferably polypropylene or ABS.

## Patentansprüche

1. Lüftungskanal, enthaltend wenigstens zwei aufeinander folgende Rohrteile (71) und eine Rohrkupplung (1, 101, 201, 301) zur gegenseitigen Kupplung der aneinander stoßenden Enden der Rohrteile, wobei die Rohrkupplung ein eine Einsteckrichtung (S) aufweisendes, gegen die Innenseite eines Rohrteils anzulegendes formbeständiges Einsteckelement (10), ein gegen die Außenseite des Rohrteils anzulegendes Spannband (20), eine sich quer zur Einsteckrichtung (S) erstreckende Brücke (12), welche Brücke das Einsteckelement (10) mit dem Spannband (20) verbindet, und Schließmittel (40, 140, 240, 340) zum Bilden eines festen Verschlusses für das Spannband um das Rohrstück enthält, **dadurch gekennzeichnet, dass** das Einsteckelement (10), das Spannband (20) und die Brücke (12) als ein Monoblock ausgebildet sind.

2. Lüftungskanal nach Anspruch 1, bei dem das Einsteckelement für ein umlaufendes Anliegen gegen die Innenseite des Rohrstücks (71) geeignet ist, welches Anliegen quer zur Einsteckrichtung (S) orientiert ist und/oder bei dem das Einsteckelement (10) einen Zylinder zur Aufnahme im Rohrstück (71) enthält.

3. Lüftungskanal nach einem der vorherigen Ansprüche, bei dem das Einsteckelement (10) ein Einsteckende enthält, das an seiner Außenseite eine Führungskante (13) aufweist, die diagonal zur Einsteckrichtung (S) orientiert ist und/oder bei dem das Einsteckelement (10) sich an der Außenseite in der Einsteckrichtung (S) verjüngt.

4. Lüftungskanal nach einem der vorherigen Ansprüche, bei dem die Außenabmessung des Einsteckelements (10) und die Innenabmessung des Rohrstücks (71) quer zur Einsteckrichtung (S) für eine aufweitende Anordnung des Endes über dem Einsteckelement gegenseitig angepasst sind, wobei die Innenabmessung infolge des Aufweitens vorzugsweise ungefähr 1 bis 5 mm zunimmt und/oder wobei das Einsteckelement auf der Innenseite einen Durchführungskanal mit einer glatten Innenwand besitzt.

5. Lüftungskanal nach einem der vorherigen Ansprüche, bei dem die Rohrkupplung (1, 101, 201, 301) eine Stoßkante (11) zur Widerlagerung gegen eine Endfläche des Rohrstücks enthält, die sich im Wesentlichen radial vom Einsteckelement erstreckt, wobei sich die Stoßkante in Umfangsrichtung des Rohrstücks vorzugsweise um das Einsteckelement umlaufend erstreckt.

6. Lüftungskanal nach einem der vorherigen Ansprüche, bei dem die Rohrkupplung (1, 101, 201, 301) zwei entgegengesetzt orientierte, in die aneinander stoßenden Rohrstücke anzuordnende Einsteckelemente (10) enthält, wobei das Einsteckelement vorzugsweise eine Stoßkante (11) zur Widerlagerung gegen zueinander weisende Endflächen der Rohrstücke (71) enthält, die sich im Wesentlichen radial vom Einsteckelement erstreckt, wobei sich die Stoßkante (11) vorzugsweise auf Abstand vom Spannband befindet, um eine freie Luftkammer zwischen den Endflächen der Rohrstücke (71) zu belassen.

7. Lüftungskanal nach einem der vorherigen Ansprüche, bei dem sich die Brücke vorzugsweise nur über einen Teil des Umfangs des Einsteckelements (10) erstreckt, wobei vorzugsweise die Brücke (12) das Einsteckelement (10) und das Spannband (20) an der Stelle der Brücke sowohl im entspannten als auch im gespannten Zustand des Spannbands (20) auf gleich bleibendem gegenseitigem Abstand und gleich bleibender Orientierung hält, wobei der gegenseitige Abstand vorzugsweise auf die Dicke der Umfangswand des Rohrstücks (71) angepasst ist, um das komprimierbare Rohrwandmaterial zwischen das Einsteckelement (10) und das Spannband (20) in einem ein wenig komprimierten Zustand an die Stelle der Brücke (12) zu bringen und/oder dort zu halten.

8. Lüftungskanal nach Anspruch 5 oder 6 und 7, bei dem die Brücke (12) eine Fortsetzung der sich in radialer Richtung erstreckenden Stoßkante (11) bildet.

9. Lüftungskanal nach einem der vorherigen Ansprüche, bei dem das Spannband (20) an seiner sich in Längsrichtung erstreckenden Seitenkante mit einer Einsteckkante (23) ausgestattet worden ist, die zum Einsteckelement (10) hin orientiert ist, welche Einsteckkante innerhalb des festen Verschlusses eine Haltekerbe im komprimierbaren Rohrwandmaterial bildet, wobei sich die Brücke (12) nur über einen Teil des Umfangs des Einsteckelements (10) erstreckt, wobei die Einsteckkante (23) des Einsteckelements in Umfangsrichtung ab oder jenseits den Enden der Brücke (12) beginnt, wobei das sich vorzugsweise an beiden Seitenkanten in Längsrichtung erstreckende Spannband (20) mit einer Einsteckkante (23) versehen worden ist.

10. Lüftungskanal nach einem der vorherigen Ansprüche, bei dem das Spannband (20) offen ist und die Schließmittel (40) an einem ersten bzw. zweiten Ende des Spannbands vorgesehen sind, wobei die Schließmittel (40) vorzugsweise mit Handeingriffelementen (48, 49) versehen sind, die an einem ersten bzw. zweiten Ende oder an einem kurzen Abstand davon vom Spannband (20) vorspringen, zur Bewegung des ersten und zweiten Endes zwischen Fingern und Daumen zueinander hin, und/oder wobei die Schließmittel (40) vorzugsweise zusammenwirkende Zentriermittel (45) zur Orientierung des ersten und zweiten Endes quer zur Längsrichtung des Spannbands (20) gerade übereinander oder zueinander hin.

11. Lüftungskanal nach einem der vorherigen Ansprüche, bei dem die Schließmittel (40, 140, 240, 340) dazu geeignet sind, in aufeinander folgenden Schließpositionen das Spannband mit abnehmendem Innendurchmesser vorzugsweise nur in der Richtung der aufeinander folgenden enger gemachten Position zu schließen, wobei die aufeinander folgenden enger gemachten Position vorzugsweise vorgegeben sind.

12. Lüftungskanal nach Anspruch 10 oder 11, bei dem die Schließmittel (40, 140, 240, 340) am ersten und zweiten Ende des Spannbands zusammenwirkende Hakenelemente (44, 46, 112, 113) enthält, wobei die Hakenelemente (44, 46, 112, 113) für die Arretierung des Eingriffzustands vorzugsweise gegenseitig angepasst sind.

13. Lüftungskanal nach einem der Ansprüche 10 bis 12, bei dem die Schließmittel (40) am ersten und/oder zweiten Ende Zähne (46) und einen Zahn (44) am zweiten bzw. ersten Ende enthält, welcher Zahn (44) mit den Zähnen (46) zusammenwirken, wobei die zusammenwirkenden Zähne (44, 46) zusammenwirkende Stoßflächen enthalten, die in Bezug auf die Schließrichtung geneigt sind.

14. Lüftungskanal nach einem der vorherigen Ansprüche, bei dem die Rohrkupplung (1, 101, 201, 301) aus einem spritzgießbaren oder extrudierbaren synthetischen Material gefertigt ist, das vorzugsweise selbst dimensionsstabil oder formbeständig ist, vorzugsweise Polypropylen oder ABS.

## Revendications

1. Conduit de ventilation comprenant au moins deux parties de tube (71) consécutives réalisées avec un matériau synthétique compressible et un couplage de tube (1, 101, 201, 301) pour le couplage mutuel des extrémités d'union des parties de tube, dans lequel le couplage de tube comprend un élément d'insertion à mémoire de forme (10) ayant une direction d'insertion (S) destinée à être placée contre l'intérieur d'une partie de tube, une bande de serrage (20) destinée à être placée contre l'extérieur de la partie de tube, un pont (12) s'étendant de manière transversale par rapport à la direction d'insertion (S), lequel pont raccorde l'élément d'insertion (10) à la bande de serrage (20), et des moyens de fermeture (40, 140, 240, 340) pour former une fermeture serrée pour la bande de serrage autour de la partie de tube, **caractérisé en ce que** l'élément d'insertion (10), la bande de serrage (20) et le pont (12) sont formés comme un monobloc.

2. Conduit de ventilation selon la revendication 1, dans lequel l'élément d'insertion est adapté pour une butée circonférentielle contre l'intérieur de la partie de tube (71), laquelle butée est orientée de manière transversale par rapport à la direction d'insertion (S), et/ou dans lequel l'élément d'insertion (10) comprend un cylindre pour le logement dans la partie de tube (71).

3. Conduit de ventilation selon l'une quelconque des revendications précédentes, dans lequel l'élément d'insertion (10) comprend une extrémité d'insertion ayant au niveau de son extérieur, un bord pilote (13) orienté en diagonale par rapport à la direction d'insertion (S), et/ou dans lequel l'élément d'insertion (10) à l'extérieur, se rétrécit progressivement dans la direction d'insertion (S).

4. Conduit de ventilation selon l'une quelconque des revendications précédentes, dans lequel la dimension extérieure de l'élément d'insertion (10) et la dimension intérieure de la partie de tube (71) transversale par rapport à la direction d'insertion (S) sont mutuellement adaptées pour une mise en place évasée de l'extrémité sur l'élément d'insertion, dans lequel la dimension intérieure en raison de l'évasement, augmente de préférence approximativement de 1 à 5 mm et/ou l'élément d'insertion à l'intérieur a un canal de conduite avec une paroi interne lisse.

5. Conduit de ventilation selon l'une quelconque des revendications précédentes, dans lequel le couplage de tube (1, 101, 201, 301) comprend un bord de butée (11) qui s'étend de manière sensiblement radiale à partir de l'élément d'insertion, pour la butée contre une face d'extrémité de la partie de tube, dans lequel le bord de butée dans la direction circonférentielle de la partie de tube s'étend de préférence de manière circonférentielle autour de l'élément d'insertion.

6. Conduit de ventilation selon l'une quelconque des revendications précédentes, dans lequel le couplage de tube (1, 101, 201, 301) comprend deux éléments d'insertion (10) orientés de manière opposée destinés à être placés dans les extrémités de tube d'union, dans lequel l'élément d'insertion comprend de préférence un bord de butée (11) qui s'étend de manière sensiblement radiale à partir de l'élément d'insertion (10), pour la butée contre les faces d'extrémité en vis-à-vis des parties de tube (71), dans lequel le bord de butée (11) est placé de préférence à l'écart de la bande de serrage pour maintenir une chambre d'air disponible entre les faces d'extrémité des parties de tube (71).

7. Conduit de ventilation selon l'une quelconque des revendications précédentes, dans lequel le pont s'étend uniquement sur une partie de la circonférence de l'élément d'insertion (10), dans lequel, de préférence, le pont (12) maintient l'élément d'insertion (10) et la bande de serrage (20) à l'emplacement du pont à une distance et une orientation mutuelles fixes identiques à la fois dans la condition au repos et la condition étanche de la bande de serrage (20), dans lequel la distance mutuelle est de préférence adaptée à l'épaisseur de la paroi circonférentielle de la partie de tube (71) pour amener et/ou maintenir le matériau de paroi de tube compressible entre l'élément d'insertion (10) et la bande de serrage (20) à l'emplacement du pont (12) dans une condition légèrement comprimée.

8. Conduit de ventilation selon la revendication 5 ou 6 et 7, dans lequel le pont (12) forme une continuité du bord de butée (11) s'étendant dans la direction radiale.

9. Conduit de ventilation selon l'une quelconque des revendications précédentes, dans lequel la bande de serrage (20) au niveau de son bord latéral s'étendant dans la direction longitudinale a été prévue avec un bord d'insertion (23) orienté vers l'élément d'insertion (10), lequel bord d'insertion à l'intérieur de la fermeture étanche forme une rainure de contenu dans le matériau de paroi de tube compressible, dans lequel le pont (12) s'étend uniquement sur une partie de la circonférence de l'élément d'insertion (10), dans lequel le bord d'insertion (23) dans la direction circonférentielle de l'élément d'insertion commence à partir des extrémités du pont (12) ou au-delà de celles-ci, dans lequel la bande de serrage (20) de préférence des deux côtés latéraux s'étendant dans la direction longitudinale a été prévue avec un bord d'insertion (23).

10. Conduit de ventilation selon l'une quelconque des revendications précédentes, dans lequel la bande de serrage (20) est ouverte et les moyens de fermeture (40) sont prévus au niveau d'une première et d'une seconde extrémité, respectivement, de la bande de serrage, dans lequel les moyens de fermeture (40) sont de préférence prévus avec des éléments de mise en prise de main (48, 49) qui au niveau de ou à une courte distance de la première et de la seconde extrémité respectivement, font saillie de la bande de serrage (20) pour déplacer les première et seconde extrémités l'une vers l'autre entre les doigts et le pouce et/ou dans lequel les moyens de fermeture (40) comprennent de préférence des moyens de centrage coopérant (45) transversalement par rapport à la direction longitudinale de la bande de serrage (20) orientant les première et seconde extrémités tout droit au-dessus ou l'une vers l'autre.

11. Conduit de ventilation selon l'une quelconque des revendications précédentes, dans lequel les moyens de fermeture (40, 140, 240, 340) sont adaptés pour les positions de fermeture consécutives fermant la bande de serrage avec un diamètre interne décroissant, de préférence uniquement dans la direction desdites positions étanches consécutives, dans lequel les positions de fermeture consécutives sont de préférence prédéterminées.

12. Conduit de ventilation selon la revendication 10 ou 11, dans lequel les moyens de fermeture (40, 140, 240, 340) comprennent des éléments de crochet coopérants (44, 46, 112, 113) au niveau des première et seconde extrémités de la bande de serrage, dans lequel les éléments de crochet (44, 46, 112, 113) sont mutuellement adaptés pour bloquer la condition mise en prise.

13. Conduit de ventilation selon l'une quelconque des revendications 10 à 12, dans lequel les moyens de fermeture (40) comprennent des dents (46) au niveau de la première et/ou seconde extrémité, et une dent (44) au niveau de la seconde et de la première extrémité, respectivement, laquelle dent (44) coopère avec les dents (46), dans lequel les dents coopérantes (44, 46) comprennent des surfaces de butée coopérantes qui s'appuient par rapport à la direction de fermeture.

14. Conduit de ventilation selon l'une quelconque des revendications précédentes, dans lequel le couplage de tube (1, 101, 201, 301) est réalisé avec un matériau synthétique extrudable ou moulable par injection, qui est de préférence dimensionnellement stable ou à mémoire de forme par lui-même, de préférence du polypropylène ou de l'ABS.
